# EUROPEAN PATENT SPECIFICATION

(11) **EP 1 377 055 B1**
(45) Date of publication and mention of the grant of the patent: **22.11.2006**
(21) Application number: 03101667.8
(22) Date of filing: 10.06.2003
(51) Int. Cl.: H04N 7/08, H04N 5/00

(54) **Control of a device connected to a digital television network**
Steuerung eines mit einem digitalen Fernsehnetzwerk verbundenen Gerätes
Contrôle d'un dispositif relié à un réseau de télévision numérique

(30) Priority: 13.06.2002 FI 20021146
(43) Date of publication of application: 02.01.2004
(73) Proprietor: TeliaSonera Finland Oyj, 00510 Helsinki (FI)
(72) Inventor: POHJANEN, Petri, 90570 Oulu (FI)
(74) Representative: Pursiainen, Timo Pekka

(56) References cited:
- EP-A- 1 213 842
- WO-A-01/47248
- WO-A-02/43252
- WO-A-91/07050
- DE-A- 3 820 835
- US-A- 5 600 364
- US-A1- 2001 013 022

## Description

The invention relates to a method according to the preamble of the appended claim 1 for controlling the functions of a device connected to a digital television network. The invention also relates to a system implementing the method in accordance with the preamble of the appended claim 8.

The primary purpose of a television transmission is to transfer visual program to receivers, but in addition to the actual program, other information is often transmitted in connection with the signal, for example control data of video devices. By encrypting the transmission signal, it is possible to distribute the program so that only desired users can watch it by providing the users with means for decrypting the encrypted signal. By means of the additional information contained in the television transmission, it is possible to provide the consumers with telematic additional services, and by encrypting said information it is possible to direct the additional services only for a desired group of users.

There are a number of different known terminal i.e. set-top-box solutions for decrypting an encrypted television signal. Typically in terminal solutions the decryption key necessary for decrypting the signal is transferred to the terminal by suitable data recording means, such as a memory card.

In different kinds of telematic services data or control data is transmitted to receivers in connection with the television transmission. One such a service is PDC, program delivery control service, that can be used for example to indicate the starting and ending times of programs for receivers, which enables for example automatic starting and stopping of video recorders. The activation of the function typically requires actions to be taken by the user, and typically the actions must be performed separately for each program to be recorded.

Patent publication US 5,659,368 discloses a system in which auxiliary data is transferred in connection with a television transmission signal.

Said auxiliary data contains various information, such as information on future programs and this auxiliary data can also be used for controlling video devices.

Publication WO A 01/47248 discloses the control of peripheral devices of a television apparatus, such as a PC, a video recorder or an audio device, but in this case the control takes place by means of a web-server through Internet.

Publication EP A 1 213 842 discloses a solution in which commands are given to an STB device by means of a mobile phone. In said system the aim is to monitor that the user is entitled to watch the programs transmitted via the set-top-box. The access right is verified by means of a mobile phone, wherein, depending on the mobile phone controlling the set-top-box it is only possible to view programs "permitted" for the owner of the mobile phone in question.

The primary aim of the present invention is to present a method, in which functions of various peripheral devices are controlled by means of control data transmitted in a digital television network.

To attain this purpose, the method according to the invention is primarily characterized in what will be presented in the characterizing part of the independent claim 1.

The invention further relates to a system to be applied in the method. The system according to the invention is primarily characterized in what will be presented in the characterizing part of the independent claim 8.

The other, dependent claims will present some preferred embodiments of the invention.

The basic idea of the invention is to enable the use of information received in a terminal, such as a set-top-box apparatus in connection with a digital television transmission with the authorization of the user in such a manner that by means of the information it is possible to automatically activate desired functions of peripheral devices and applications in connection with or in the vicinity of the terminal.

The system is composed of a terminal connected to a digital television network and peripheral devices connected to said terminal. The digital television network, in turn, comprises connection for servers of different service-providers and other devices, by means of which for example control data necessary for controlling the peripheral devices is produced, said information being transferred in connection with the actual television transmission.

The terminal comprises a connection at least to a digital television network and at least for one peripheral device. To connect the peripheral device to the television network, the terminal is arranged to perform the necessary changes in the signal.

It is possible to connect several different peripheral devices, for example a computer, a video recorder or a DVD-R device to the terminal. The peripheral devices may be integrated in the terminal, or the peripheral devices may be independent separate units containing a data transmission connection compatible with the terminal, such as a bluetooth connection, CE-BUS connection (consumer electronics bus), USB connection (universal serial bus) or IrDA connection (infrared data association).

The method according to the invention for activation of functions of peripheral devices is based on the idea that a terminal suitable for the system identifies a peripheral device or devices located in the vicinity. In connection with the identification the possible decryption key of the television transmission is transferred from the peripheral device to the terminal, and at the same time it is also possible to transfer a separate automatic activation key from the peripheral device to the terminal. The activation key contains setting data according to which the system, especially the terminal, functions under the control of control data contained in the program flow.

After the decryption of the setting data and activation of the functions according to the setting data in the terminal, the terminal can function in accordance with the program-specific control data contained in the program flow, controlling thus for example the peripheral devices according to the commands.

The user determines the functions to be performed by means of the system, i.e. authorizes the system, which process can take place either in advance or according to the case. The authorization in advance means that the user only determines the topic of the function in advance, and the system takes care of the timing and more accurate control of the function automatically. The authorization in advance can take place in many ways, for example in the case of a television program in such a manner that the user selects the interesting topics, for example a sport, a type of music or a program of current affairs, or the user may select certain programs, for example a movie according to the actor, and the broadcast relating thereto is stored. It is also advantageously possible to determine what kind of information is to be collected or which functions are to be executed when a certain message is received. It is, for example, possible to determine such a function that the manufacturing material, selling price and resellers of various products are stored and printed out, and a request for further information is sent.

In a preferred embodiment of the invention the user authorizes the system by using setting data provided by an external service provider, which setting data the user transfers to the system. For example, the user can receive setting data provided by an external service provider by means of his or her mobile station, and transfer the setting data for example by means of a bluetooth connection to the system.

Authorization conducted according to the case can be implemented in such a manner that it applies only to said transmission, and thus it is possible to give all the corresponding transmissions the authorization to function as control data in the future.

It is an advantage of the invention that it the activation method of peripheral devices enables the control of different peripheral devices substantially user-independently, in which the user has determined in advance certain guidelines and limitations that control the function, whereafter the system operates in accordance with said guidelines and limitations and in accordance with the control data received from the digital television network.

The method according to the invention for activating peripheral devices can be applied in several applications. The most typical applications include automatic storing of television programs, as well as transmission of additional information to the user. Additional information may relate to a certain program or commercial, wherein the service provider can also provide the target audience with better targeted and user-oriented information. It is also possible to utilize the transmission capacity of the television network more efficiently when programs can be transferred in advance to the devices of the user, to wait for a suitable moment of time for the user.

Via the television network it is also possible to control devices other than those relating directly to the watching of television. It is for example possible to control various monitoring devices, such as measuring devices or alarm devices, as well as devices relating to the household electronics, such as lighting and heating. The consumer can order the control service from an external service provider, wherein the service provider advantageously provides the consumer with the setting data and arranges the necessary control data in the program flow. Thus, it is not necessary for the consumer himself or herself to control said devices.

In the following, the invention will be described in more detail with reference to the appended principle drawings, in which
- Fig. 1: shows an embodiment of the system,
- Fig. 2: shows the data transmission order between the different parts of the system, and
- Fig. 3: shows an embodiment of the system.

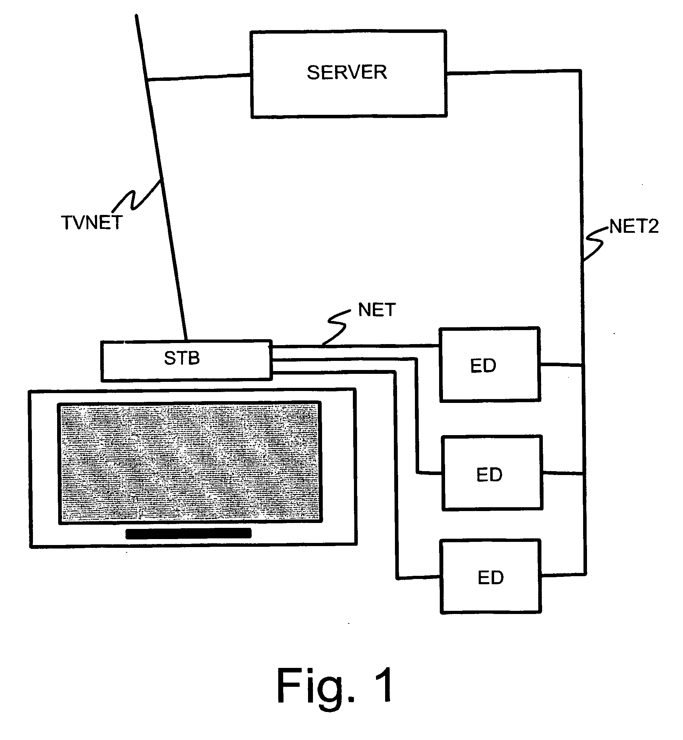

In the embodiment shown in Fig. 1, the system according to the invention is composed of a terminal STB connected to a digital television network TVNET, and one or several peripheral devices ED connected to said terminal. The digital television network TVNET, in turn, contains connections for servers SERVER of different service providers and for the necessary peripheral devices, by means of which for example control data necessary for controlling the peripheral devices ED is produced, said data being transferred in connection with the actual television transmission.

The terminal STB comprises a connection at least to the digital television network TVNET and at least for one peripheral device ED. To connect the peripheral device ED to the television network TVNET, the terminal STB is arranged to perform the necessary changes in the signal, said changes being advantageously conducted by means of a program. Furthermore, the encryption and decryption of the telecommunication both between the television network TVNET and the terminal and the peripheral device ED and the terminal is arranged in the terminal STB according to a preferred embodiment of the invention. It is possible to use suitable known encryption methods for the encryption, advantageously solutions based partly in the use of a public encryption key.

It is possible to connect several different peripheral devices ED, for example a mobile phone, a computer, a video recorder or a recording DVD device to the terminal STB. The peripheral devices ED may be integrated in the terminal STB, or the peripheral devices can be independent separate units. It is a requirement for connecting separate peripheral devices ED that they contain a data transmission connection NET compatible with the terminal STB, such as a bluetooth connection, CE-BUS connection (consumer electronics bus), USB connection (universal serial bus) or IrDA connection (infrared data association). It is, of course, also possible to connect other data transmission connections NET2 to the peripheral device ED than the connection NET leading to the terminal STB, as well as separate auxiliary devices, such as data recorders and printers. It is also possible that separate peripheral devices ED also function in co-operation with each other without the terminal STB directly affecting their co-operation.

It is, of course, also possible to implement the terminal STB in such a manner that it can also be connected to another data transmission network in addition to the digital television network TVNET, for example to a telephone network and a computer network. The additional connections established thereby can be utilized for example for using and providing various services which for technical and economical reasons cannot be provided via a digital television network TVNET.

The method according to the invention for activation of functions of peripheral devices ED is based on the idea that a terminal STB suitable for the system at first identifies a peripheral device ED or devices located in the vicinity, as well as the identifiers relating to said devices. To identify the peripheral device ED, it is advantageous to use a data transmission connection NET suitable for the purpose, such as a bluetooth connection, CE-BUS connection, USB connection or IrDA connection. In connection with the identification, the possible key decryption key the television transmission is transferred from the peripheral device ED to the terminal STB, and said key is in a preferred embodiment transferred from the peripheral device to the terminal, encrypted by the keys of the terminal. In a preferred embodiment, the decryption key is obtained from the server SERVER of the network, and the key is equipped with an electronic signature of the user himself/herself. If the peripheral device ED does not have the necessary key, the peripheral device requests for the key either automatically or when activated by the user from the server SERVER located in the network, or possibly from a server located elsewhere. It is possible to use either a digital television network TVNET or another data transmission connection NET2 for the data transmission, for example various wired or wireless telephone networks. The key can be transmitted to the terminal STB and to the peripheral device ED also by means of various data recording means, such as smart card or iButton applications.

In connection with the transfer of the decryption key of the television transmission, it is also possible to transfer a separate automatic activation key from the peripheral device ED to the terminal STB, said automatic activation key being acquired by means of similar connections and methods. The activation key contains setting data, according to which the system, especially a terminal STB, functions under the control of control data contained in the program flow. It is also advantageous to transfer this key from the peripheral device ED to the terminal, when encrypted by the keys of the terminal STB.

In a preferred embodiment the activation key containing the setting data is provided by the service provider, and the delivering of the same to the user is based on authorization of the system by the user. In connection with the authorization the user specifies his or her needs in relation to the functions, whereafter the service provider prepares and delivers the setting data and possible control data corresponding to the specification made by the user. It is also possible that the user himself/herself creates the setting data and control data corresponding to his or her own needs by means of a suitable terminal STB or peripheral device ED, for example by means of a computer equipped with a suitable application.

In a preferred embodiment, the activation key containing the setting data and the control data possibly accompanying the same are encrypted by means of a public encryption key of the partial information relating to the data transmission, said encryption key being transmitted to all terminals STB in connection with the digital television transmission. Thus, the decryption key for a part of a predetermined data transmission that is to be transferred to the terminal STB and contains advantageously the identification data of the user, and possible control data can be transmitted to all terminals supporting the system.

After the decryption of the setting data and activation of the functions according to the setting data in the terminal STB, the terminal can advantageously function in accordance with the program-specific control data accompanying the program flow, controlling thus for example the peripheral devices ED according to the setting data and control data. For example in the program flow it is possible to transmit for example commercials or program information that activate a video recorder to function on a set day and on a set time, to record a program relating to said program information without any actions taken by the user. It is also possible that information, for example information on the closest representative of a commercial that has been seen, is added to the database of the peripheral device ED of the user by means of an automatic function.

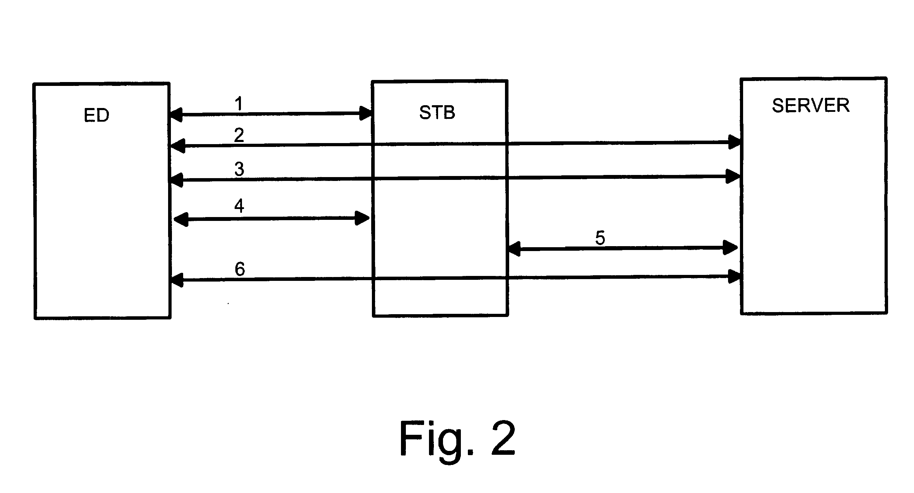

Fig. 2 shows in principle the implementation order of data transmission between the different devices in the above-described system according to the invention in a reduced chart, in which
- Step 1: the terminal STB detects the peripheral device ED and requests the peripheral device to transfer the decryption key of the television transmission and/or other possible keys, setting data and control data,
- Step 2: the peripheral device ED requests for the possibly missing keys from the server SERVER,
- Step 3: the server SERVER of the network transmits the keys to the peripheral device ED,
- Step 4: the peripheral device ED transmits the keys to the terminal STB,
- Step 5: the terminal STB receives and, if necessary, decrypts the encrypted television transmission and the control data contained in the transmission, and functions according to the setting data and control data, and
- Step 6: the peripheral device ED and the server SERVER connected to the peripheral device exchange information, if necessary.

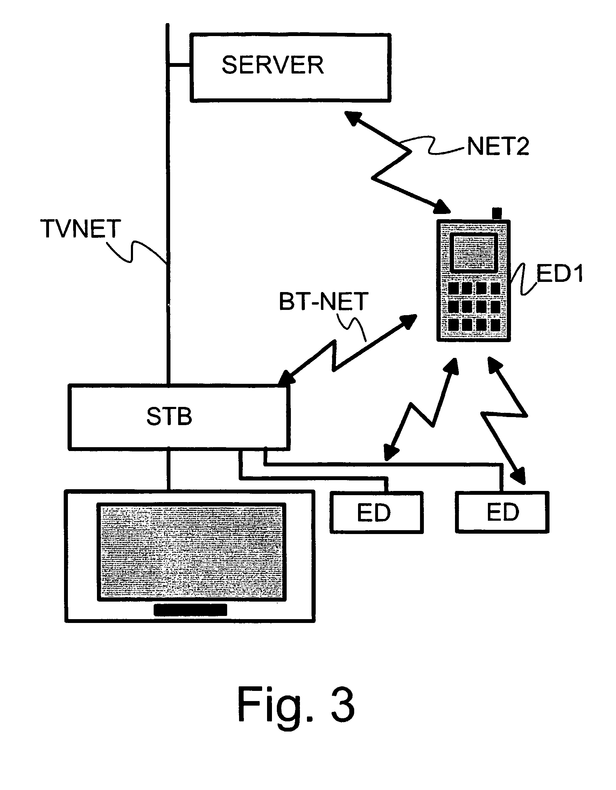

Fig. 3 shows an embodiment of the system according to the invention in a reduced manner. Said system is composed at least of a terminal STB connected to a digital television network TVNET, and peripheral devices ED, such as a television, a video recorder and a recording DVD player connected to said terminal. In the example one of the peripheral devices ED1 is a mobile station, such as a GPRS phone equipped with a bluetooth connection BT-NET. In the embodiment, the decryption key of the television transmission and the setting data are retrieved from the server SERVER by means of the mobile station ED1, from which the information is transferred to the terminal STB and/or to other peripheral devices by means of the bluetooth connection. Thereafter the system functions as described hereinabove, wherein the control data is transferred via the digital television network TVNET or alternatively for example via a mobile communication network NET2, wherein said control data is transmitted from the mobile station ED1 to the terminal STB and/or other peripheral devices ED. The embodiment according to the example makes it possible to subscribe services subject to charge that are available in the television network TVNET via a mobile station ED1, wherein the user can subscribe and use the desired services, irrespective of his or her location, provided that the user has access to another part of the system connected to the digital television network. In the presented preferred embodiment, the invoicing of the television services subject to charge is directed in connection with other invoicing relating to the mobile station ED1.

The control of peripheral devices ED according to the invention can be used without the signal encryption between different devices that was disclosed in the above examples. The connection between the terminal STB and the peripheral device ED can be attained in a manner deviating from the one presented in the example.

## Claims

1. A method for controlling the functions of a peripheral device (ED, ED1) connected to a terminal (STB), wherein
- the terminal (STB), which is a set-top-box, is connected to a digital television network (TVNET)
- at least one peripheral device (ED, ED1) is connected to the terminal (STB) and a mobile communication network (NET2),
**characterized in that**
- the setting data is transferred to the peripheral device (ED, ED1) via the mobile communication network (NET2),
- the setting data is transferred from the peripheral device (ED, ED1) to the terminal (STB),
- the setting data is stored in the terminal (STB),
- the peripheral device (ED, ED1) to be controlled functions under the control of setting data stored in the terminal (STB) and control data provided in the program flow of the digital television network (TVNET).

2. The method according to claim 1, **characterized in that** the user is identified by means of the peripheral device (ED).

3. The method according to claim 1 or 2, **characterized in that** the setting data transferred from the peripheral device (ED, ED1) to the terminal (STB) is encrypted.

4. The method according to any of the preceding claims, **characterized in that** decryption key of the television transmission is transferred from the peripheral device (ED, ED1) to the terminal (STB).

5. The method according to any of the claims 1 to 3, **characterized in that** at least one of the following is used for the data transmission (NET) between the terminal (STB) and the peripheral device (ED, ED1): bluetooth connection, CE-BUS connection, USB connection or IrDA connection.

6. The method according to any of the preceding claims, **characterised in that** the setting data and control data are produced in a server (SERVER) connected to the television network (TVNET).

7. The method according to any of claims 1-5, **characterized in that** in the method
- the setting data and control data are produced in a server (SERVER) connected to the television network (TVNET).
- the terminal (STB) detects the peripheral device (ED, ED1) and requests the peripheral device to transfer the decryption key of the television transmission and at least one item of setting data,
- if the peripheral device (ED, ED1) detects that the decryption key of the television transmission and the setting data are missing, the peripheral device requests for the missing information from the server (SERVER),
- the server transmits the requested information to the peripheral device (EDED1),
- the peripheral device (ED, ED1) transmits the requested information to the terminal (STB), and
- the terminal (STB) receives and, if necessary, decrypts the encrypted television transmission and the control data contained in the transmission, and functions in accordance with the setting data and control data.

8. A system for controlling the functions of a peripheral device (ED, ED1), which system comprises
- a terminal (STB), which is a set-top-box, connected to a digital television network (TVNET)
- at least one peripheral device (ED, ED1) connected to the terminal (STB) and a mobile communication network (NET2),
**characterized in that**
- the peripheral device (ED, ED1) is adapted to receive the setting data via a mobile communication network (NET2),
- the peripheral device (ED, ED1) is adapted to transfer the setting data to the terminal (STB)
- the terminal (STB) is adapted to store the transferred setting data,
- the peripheral device (ED, ED1) to be controlled is adapted to function under the control of setting data stored in the terminal (STB) and control data provided in the program flow of the digital television network (TVNET).

9. The system according to claim 8, **characterized in that** the system comprises at least
- the terminal (STB) for processing the control data,
- the peripheral device (ED, ED1) for identifying the user,
- means for setting up a data transmission connection between the terminal (STB) and the peripheral device (ED, ED1).

10. The system according to claim 9, **characterized in that** the terminal system comprises several peripheral devices (ED, ED1) for performing the function under the control of setting data stored in the terminal (STB).

11. The system according to claim 9 or 10, **characterized in that** the terminal (STB) is arranged at least to
- decrypt the encryption of an encrypted signal coming from the digital television network (TVNET), and
- control one or several peripheral devices (ED, ED1).

12. The system according to any of the claims 9 to 11, **characterized in that** the data transmission connection (NET) between the terminal (STB) and the peripheral device (ED, ED1) is a bluetooth connection.

13. The system according to any of the claims 8 to 12, **characterized in that** at least one of the peripheral devices (ED) is a mobile station (ED1) that is arranged to receive the setting data and to transfer said setting data to the terminal (STB).

## Patentansprüche

1. Verfahren zum Steuern der Funktionen einer mit einem Endgerät (STB) verbundenen Peripherievorrichtung (ED, ED1), wobei
- das Endgerät (STB), bei dem es sich um eine Set-Top-Box handelt, mit einem digitalen Fernsehnetz (TVNET) verbunden ist,
- mindestens eine Peripherievorrichtung (ED, ED1) mit dem Endgerät (STB) und einem Mobilkommunikationsnetz (NET2) verbunden ist,
**dadurch gekennzeichnet, dass**
- die Einstelldaten über das Mobilkommunikationsnetz (NET2) zur Peripherievorrichtung (ED, ED1) übertragen werden,
- die Einstelldaten von der Peripherievorrichtung (ED, ED1) zum Endgerät (STB) übertragen werden,
- die Einstelldaten im Endgerät (STB) gespeichert werden,
- die zu steuernde Peripherievorrichtung (ED, ED1) unter der Steuerung von im Endgerät (STB) gespeicherten Einstelldaten und von im Programmfluss des digitalen Fernsehnetzes (TVNET) bereitgestellten Steuerdaten arbeitet.

2. Verfahren nach Anspruch 1,
**dadurch gekennzeichnet, dass**
der Benutzer durch Mittel der Peripherievorrichtung (ED) identifiziert wird.

3. Verfahren nach Anspruch 1 oder 2,
**dadurch gekennzeichnet, dass**
die von der Peripherievorrichtung (ED, ED1) zum Endgerät (STB) übertragenen Einstelldaten verschlüsselt werden.

4. Verfahren nach einem der vorangehenden Ansprüche,
**dadurch gekennzeichnet, dass**
der Entschlüsselungsschlüssel der Fernsehübertragung von der Peripherievorrichtung (ED, ED1) zum Endgerät (STB) übertragen wird.

5. Verfahren nach einem der Ansprüche 1 bis 3,
**dadurch gekennzeichnet, dass**
zumindest eine der folgenden Verbindungen für die Datenübertragung (NET) zwischen dem Endgerät (STB) und der Peripherievorrichtung (ED, ED1) verwendet wird: eine Bluetooth-Verbindung, eine CE-BUS-Verbindung, eine USB-Verbindung oder eine IrDA-Verbindung.

6. Verfahren nach einem der vorangehenden Ansprüche,
**dadurch gekennzeichnet, dass**
die Einstelldaten und die Steuerdaten in einem mit dem Fernsehnetz (TVNET) verbundenen Server (SERVER) erzeugt werden.

7. Verfahren nach einem der Ansprüche 1 bis 5,
**dadurch gekennzeichnet, dass**
bei dem Verfahren
- die Einstelldaten und die Steuerdaten in einem mit dem Fernsehnetz (TVNET) verbundenen Server (SERVER) erzeugt werden,
- das Endgerät (STB) die Peripherievorrichtung (ED, ED1) ermittelt und die Peripherievorrichtung auffordert, den Entschlüsselungsschlüssel der Fernsehübertragung und zumindest ein Datenwort der Einstelldaten zu übertragen,
- wenn die Peripherievorrichtung (ED, ED1) ermittelt, dass der Entschlüsselungsschlüssel der Fernsehübertragung und die Einstelldaten fehlen, die Peripherievorrichtung die fehlende Information vom Server (SERVER) anfordert,
- der Server die angeforderte Information zur Peripherievorrichtung (ED, ED1) überträgt,
- die Peripherievorrichtung (ED, ED1) die angeforderte Information zum Endgerät (STB) überträgt, und
- das Endgerät (STB) die verschlüsselte Fernsehübertragung und die in der Übertragung enthaltenen Steuerdaten empfängt, und falls erforderlich entschlüsselt, und gemäß den Einstelldaten und den Steuerdaten arbeitet.

8. System zum Steuern der Funktionen einer Peripherievorrichtung (ED, ED1), wobei das System umfasst:
- ein Endgerät (STB), bei dem es sich um eine mit einem digitalen Fernsehnetz (TVNET) verbundene Set-Top-Box handelt
- mindestens eine mit dem Endgerät (STB) und einem Mobilkommunikationsnetz (NET2) verbundene Peripherievorrichtung (ED, ED1),
**dadurch gekennzeichnet, dass**
- die Peripherievorrichtung (ED, ED1) ausgelegt ist, um die Einstelldaten über ein Mobilkommunikationsnetz (NET2) zu empfangen,
- die Peripherievorrichtung (ED, ED1) ausgelegt ist, um die Einstelldaten zum Endgerät (STB) zu übertragen,
- das Endgerät (STB) ausgelegt ist, um die übertragenen Einstelldaten zu speichern,
- die zu steuernde Peripherievorrichtung (ED, ED1) ausgelegt ist, um unter der Steuerung von im Endgerät (STB) gespeicherten Einstelldaten und von im Programmfluss des digitalen Fernsehnetzes (TVNET) bereitgestellten Steuerdaten zu arbeiten.

9. System nach Anspruch 8,
**dadurch gekennzeichnet, dass**
das System zumindest umfasst:
- das Endgerät (STB) zur Verarbeitung der Steuerdaten,
- die Peripherievorrichtung (ED, ED1) zur Identifizierung des Benutzers,
- Mittel zum Einrichten einer Datenübertragungsverbindung zwischen dem Endgerät (STB) und der Peripherievorrichtung (ED, ED1).

10. System nach Anspruch 9,
**dadurch gekennzeichnet, dass**
das Endsystem mehrere Peripherievorrichtungen (ED, ED1) zur Durchführung des Arbeitens unter der Kontrolle von im Endgerät (STB) gespeicherten Einstelldaten umfasst.

11. System nach Anspruch 9 oder 10,
**dadurch gekennzeichnet, dass**
das Endgerät (STB) zumindest ausgelegt ist, um
- die Verschlüsselung eines vom digitalen Fernsehnetz (TVNET) kommenden verschlüsselten Signals zu entschlüsseln und
- eine oder mehrere Peripherievorrichtungen (ED, ED1) zu steuern.

12. System nach einem der Ansprüche 9 bis 11,
**dadurch gekennzeichnet, dass**
die Datenübertragungsverbindung (NET) zwischen dem Endgerät (STB) und der Peripherievorrichtung (ED, ED1) eine Bluetooth-Verbindung ist.

13. System nach einem der Ansprüche 8 bis 12,
**dadurch gekennzeichnet, dass**
mindestens eine der Peripherievorrichtungen (ED) eine Mobilstation (ED1) ist, die ausgelegt ist, um die Einstelldaten zu empfangen und die Einstelldaten zum Endgerät (STB) zu übertragen.

## Revendications

1. Procédé de contrôle des fonctions d'un dispositif périphérique (ED, ED1) relié à un terminal (STB), dans lequel
- le terminal (STB), qui est un boîtier décodeur, est relié à un réseau de télévision numérique (TVNET)
- au moins un dispositif périphérique (ED, ED1) est relié au terminal (STB) et à un réseau de communication mobile (NET2),
**caractérisé en ce que**
- les données de réglage sont transférées vers le dispositif périphérique (ED, ED1) via le réseau de communication mobile (NET2),
- les données de réglage sont transférées entre le dispositif périphérique (ED, ED1) et le terminal (STB),
- les données de réglage sont stockées dans le terminal (STB),
- le dispositif périphérique (ED, ED1) à contrôler fonctionne sous le contrôle des données de réglage stockées dans le terminal (STB) et de données de contrôle fournies dans le flux de programmes du réseau de télévision numérique (TVNET).

2. Procédé selon la revendication 1, **caractérisé en ce que** l'utilisateur est identifié à l'aide du dispositif périphérique (ED).

3. Procédé selon la revendication 1 ou 2, **caractérisé en ce que** les données de réglage transférées entre le dispositif périphérique (ED, ED1) et le terminal (STB) sont cryptées.

4. Procédé selon l'une quelconque des revendications précédentes, **caractérisé en ce que** la clé de décryptage de la transmission télévisuelle est transférée entre le dispositif périphérique (ED, ED1) et le terminal (STB).

5. Procédé selon l'une quelconque des revendications 1 à 3, **caractérisé en ce qu'**au moins l'un de ce qui suit est utilisé pour la transmission de données (NET) entre le terminal (STB) et le dispositif périphérique (ED, ED1) : une connexion Bluetooth, une connexion CE-BUS, une connexion USB ou une connexion IrDA.

6. Procédé selon l'une quelconque des revendications précédentes, **caractérisé en ce que** les données de réglage et les données de contrôle sont produites dans un serveur (SERVER) relié au réseau de télévision (TVNET).

7. Procédé selon l'une quelconque des revendications 1 à 5, **caractérisé en ce que**, dans le procédé
- les données de réglage et les données de contrôle sont produites dans un serveur (SERVER) relié au réseau de télévision (TVNET),
- le terminal (STB) détecte le dispositif périphérique (ED, ED1) et demande au dispositif périphérique de transférer la clé de décryptage de la transmission télévisuelle et au moins un élément des données de réglage,
- si le dispositif périphérique (ED, ED1) détecte que la clé de décryptage de la transmission télévisuelle et les données de réglage manquent, le dispositif périphérique demande les informations manquantes auprès du serveur (SERVER),
- le serveur transmet les informations demandées au dispositif périphérique (ED, ED1),
- le dispositif périphérique (ED, ED1) transmet les informations demandées au terminal (STB), et
- le terminal (STB) reçoit et, si nécessaire, décrypte la transmission télévisuelle cryptée et les données de contrôle contenues dans la transmission, et fonctionne selon les données de réglage et les données de contrôle.

8. Système de contrôle des fonctions d'un dispositif périphérique (ED, ED1), ledit système comprenant
- un terminal (STB), qui est un boîtier décodeur, relié à un réseau de télévision numérique (TVNET),
- au moins un dispositif périphérique (ED, ED1) relié au terminal (STB) et à un réseau de communication mobile (NET2),
**caractérisé en ce que**
- le dispositif périphérique (ED, ED1) est adapté afin de recevoir les données de réglage via un réseau de communication mobile (NET2),
- le dispositif périphérique (ED, ED1) est adapté afin de transférer les données de réglage vers le terminal (STB)
- le terminal (STB) est adapté afin de stocker les données de réglage transférées,
- le dispositif périphérique (ED, ED1) à contrôler est adapté afin de fonctionner sous le contrôle des données de réglage stockées dans le terminal (STB) et des données de contrôle fournies dans le flux de programmes du réseau de télévision numérique (TVNET).

9. Système selon la revendication 8, **caractérisé en ce que** le système comprend au moins
- le terminal (STB) destiné à traiter les données de contrôle,
- le dispositif périphérique (ED, ED1) destiné à identifier l'utilisateur,
- un moyen pour établir une connexion de transmission de données entre le terminal (STB) et le dispositif périphérique (ED, ED1).

10. Système selon la revendication 9, **caractérisé en ce que** le système de terminal comprend plusieurs dispositifs périphériques (ED, ED1) destinés à effectuer la fonction sous le contrôle des données de réglage stockées dans le terminal (STB).

11. Système selon la revendication 9 ou 10, **caractérisé en ce que** le terminal (STB) est agencé au moins afin de
- décrypter le cryptage d'un signal crypté provenant du réseau de télévision numérique (TVNET), et
- contrôler un ou plusieurs dispositif(s) périphérique(s) (ED, ED1).

12. Système selon l'une quelconque des revendications 9 à 11, **caractérisé en ce que** la connexion de transmission de données (NET) entre le terminal (STB) et le dispositif périphérique (ED, ED1) est une connexion Bluetooth.

13. Système selon l'une quelconque des revendications 8 à 12, **caractérisé en ce qu'**au moins l'un des dispositifs périphériques (ED) est une station mobile (ED1) qui est agencée afin de recevoir les données de réglage et de transférer lesdites données de réglage vers le terminal (STB).
